Europäisches Patentamt

European Patent Office

Office européen des brevets

(11) Publication number: **0 469 249 A1**

## EUROPEAN PATENT APPLICATION

(21) Application number: **91107359.1**

(22) Date of filing: **07.05.91**

(51) Int. Cl.5: **B26D 5/30, G06K 15/00**

(30) Priority: **31.07.90 JP 203153/90**

(43) Date of publication of application:
**05.02.92 Bulletin 92/06**

(84) Designated Contracting States:
**CH DE FR GB LI SE**

(71) Applicant: **MIMAKI ENGINEERING CO., LTD.**
**1333-3 Oaza Kazawa, Tohbu-machi**
**Chiisagata-gun, Nagano-ken(JP)**

(72) Inventor: **Kobayashi, Hisayuki**
**2-18-10, Tokida**
**Ueda-shi, Nagano(JP)**

(74) Representative: **Eisenführ, Speiser & Strasse**
**Martinistrasse 24**
**W-2800 Bremen 1(DE)**

(54) **Cutting plotter.**

(57) A cutting plotter (10) wherein, in a state in which a cutter (50) grasped by a pen carriage (30) so as to be rotatable on its own axis is pressed against a surface of a sheet (60) placed on a recording surface (20;200), the pen carriage (30) is moved in X-Y directions relative to the sheet (60) on this sheet (60), thereby to cut contours of a character, a symbol or the like in the sheet surface. An electronic equipment (70), such as word processor, personal computer or electronic pocketbook, which is commonly used is employed as a host computer for driving the cutting plotter (10). The cutting plotter (10) is furnished with a memory device (82) which stores therein the contour data items of a plurality of characters, symbols etc. to be cut, and a decoder (84) which operates to decode printer controlling codes transmmitted from the electronic equipment (70) to the cutting plotter (10) proper, to extract the contour data of a character, a symbol or the like corresponding to the codes from the stored contents of the memory device (82), and to drive the cutting plotter (10) proper on the basis of the extracted contour data.

F I G. 1

## BACKGROUND OF THE INVENTION:

The present invention relates to a cutting plotter which automatically cuts the contours of characters, symbols etc. in the surface of a sheet.

There has been well known a plotter, called "cutting plotter", wherein a cutter is grasped by a pen carriage so as to be rotatable on its own axis. In the advertising business world, etc., the cutting plotter is used for, e. g., the operation of cutting the contours of characters, symbols etc. in the surface of a sheet made of a synthetic resin or the like.

According to the cutting plotter, the sheet is placed on the recording surface of this plotter, and the cutter grasped by the pen carriage so as to be rotatable on its own axis is pressed against the front surface of the sheet. Under this state, the cutting plotter is driven to move the pen carriage in X-Y directions relative to the sheet on this sheet. Thus, the contours of the character, the symbol or the like can be automatically cut in the sheet surface.

In the prior art, in moving the pen carriage in the X-Y directions relative to the sheet on this sheet and thus cutting the contours of the character, the symbol or the like in the sheet surface as stated above, the contour data of the character, the symbol or the like to be cut is set in a host computer through an input operation and is transmitted from the host computer to the cutting plotter. Then, using software for controls (a controlling program) or the like set in the host computer through an input operation, the cutting plotter is driven on the basis of the contour data of the character, the symbol or the like transmitted to this plotter. Thus, the contours of the character, the symbol or the like are cut in the surface of the sheet placed on the recording surface.

In this manner, the contour data of the character, the symbol or the like to be cut is transmitted from the host computer to the cutting plotter on each occasion. The transmitted contour data is temporarily stored in the cutting plotter, and is decoded by this plotter. The stored and decoded contour data is used for moving the cutter of the cutting plotter. Such series of operations have been troublesome, and have expended much labor and a long time.

Moreover, the dedicated host computer for driving the cutting plotter has been required. It has also expended much labor and a long time to set the contour data and the controlling software in the host computer through the input operations.

## SUMMARY OF THE INVENTION:

The present invention has been made in view of the problems of the prior art mentioned above.

Accordingly, the present invention has for its object to provide a cutting plotter system which can cut the contours of a character, a symbol or the like as desired in the surface of a sheet without the necessity of setting software for controls and the contour data of the character, the symbol or the like for driving the cutting plotter proper, in a host computer through input operations on each occasion.

Another object of the present invention is to provide a cutting plotter system which can easily and promptly cut the contours of a character, a symbol or the like as desired in the surface of a sheet without the necessity of transmitting the contour data of the character, the symbol or the like to-be-cut from a host computer to the cutting plotter proper, or temporarily storing or decoding the contour data in the cutting plotter proper.

A further object of the present invention is to provide a cutting plotter system of simple architecture in which an electronic equipment commonly used, such as word processor, personal computer or electronic pocketbook, is employed as a host computer for driving the cutting plotter proper.

According to the present invention, there is provided a cutting plotter system comprising an electronic equipment, such as word processor, personal computer or electronic pocketbook, which is capable of affording characters, symbols etc. as inputs, and an interface which connects the cutting plotter proper with the electronic equipment. Also, the cutting plotter system comprises memory means for storing therein the contour data items of a plurality of characters, symbols etc. to be cut by the cutting plotter proper, and drive means for driving the cutting plotter proper on the basis of the contour data items of the characters, symbols etc. stored in the memory means. Further, the cutting plotter system comprises decode means for decoding printer controlling codes transmitted from the electronic equipment to the cutting plotter proper through the interface, for extracting the contour data of a character, a symbol or the like corresponding to the codes from the plurality of contour data items stored in the memory means, and for actuating the drive means on the basis of the extracted contour data of the character, the symbol or the like.

In a preferred embodiment of the present invention, the cutting plotter system stores the contour data items of a plurality of characters, symbols etc. each having different sizes, in the memory means.

In another preferred embodiment of the present invention, the memory means includes a hard disk, a floppy disk or the like whose stored contents can be changed or replaced.

In the cutting plotter system of the present invention constructed as described above, a character, a symbol or the like corresponding to the contours of a character, a symbol or the like to be cut by the cutting plotter proper is afforded as an input from a keyboard or the like to the electronic equipment, such as word processor, personal computer or electronic pocketbook. Subsequently, the printer controlling codes of the character, the symbol or the like afforded as the input are transmitted from the electronic equipment to the decode means through the interface. Subsequently, the decode means decodes the codes, extracts the contour data of the character, the symbol or the like corresponding to the codes from the plurality of contour data items stored in the memory means, and actuates the drive means on the basis of the extracted contour data of the character, the symbol or the like. Thus, in the state in which a cutter grasped by a pen carriage in the cutting plotter proper is pressed against the surface of a sheet placed on a recording surface in the cutting plotter proper, the pen carriage is moved in X-Y directions relative to the sheet on this sheet.

Then, the contours of the character, the symbol or the like corresponding to the character, the symbol or the like afforded as the input to the electronic equipment can be automatically cut in the surface of the sheet put on the recording surface, by the cutter.

Besides, in the cutting plotter system in which the contour data items of a plurality of characters, symbols etc. each having different sizes are stored in the memory means, the decode means operates to extract the contour data of a character, a symbol or the like of predetermined size corresponding to printer controlling codes which indicate a character, a symbol or the like and the size thereof and which are transmitted from the electronic equipment to the decode means through the interface, from the plurality of contour data items stored in the memory means of the cutting plotter system, and to actuate the drive means on the basis of the extracted contour data of the character, the symbol or the like of predetermined size. Thus, the contours of the identical character, the identical symbol or the like having the different sizes can be cut in the sheet surface at will.

Further, in the cutting plotter system in which the memory means includes a hard disk, a floppy disk or the like whose stored contents can be changed or replaced, the contour data items of characters, symbols etc. stored in the memory means are changed or replaced. Thus, the contours of various characters of different styles, various symbols of different shapes, etc. can be cut in the sheet surface at will by the use of the cutting plotter proper.

BRIEF DESCRIPTION OF THE DRAWINGS:

These and other objects and numerous effects of the present invention will become apparent by reference to the following detailed description and the accompanying drawings. The same symbols indicate identical or equivalent parts throughout the drawings, in which:

Fig. 1 is a block diagram illustrative of the schematic construction of an embodiment of a flat bed type cutting plotter according to the present invention; and

Fig. 2 is a block diagram illustrative of the schematic construction of an embodiment of a paper moving type cutting plotter according to the present invention.

DETAILED DESCRIPTION OF THE PREFERRED EMBODIMENTS:

Now, cutting plotters embodying the present invention will be described with reference to the drawings.

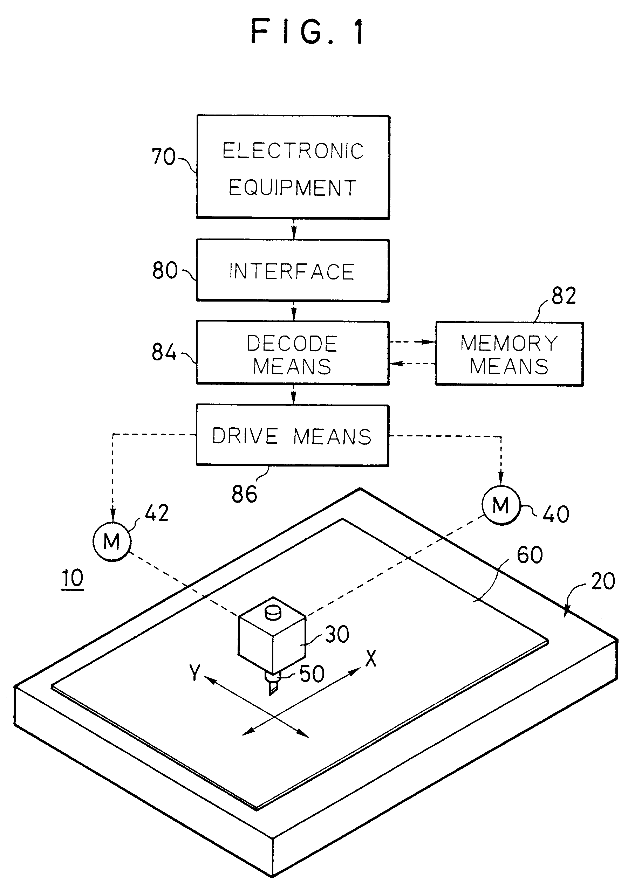

Fig. 1 shows a block diagram for explaining the schematic construction of the preferred embodiment in the case where the present invention is applied to a cutting plotter called the "flat bed type". The embodiment illustrated in the figure will be described below.

The cutting plotter 10 in Fig. 1 has a flat recording surface 20 of large surface area.

A pen carriage 30 is supported on the recording surface 20 through support means such as a slider (not shown) so as to be movable in the widthwise direction, namely, Y direction of the recording surface 20, and in the lengthwise direction, namely, X direction thereof.

A driving motor, such as servomotor or stepping motor, 40 for moving the pen carriage 30 in the X direction, and a driving motor, such as servomotor or stepping motor, 42 for moving the pen carriage 30 in the Y direction are respectively coupled to this pen carriage 30 through transmission means (not shown) configured of pulleys, wire etc. for transmitting the turning forces of the driving motors 40 and 42 to the pen carriage 30.

Further, a cutter 50 formed with a blade at its fore end is grasped by the pen carriage 30 so as to be rotatable on its own axis.

With the above construction, a sheet 60 is placed on the flat recording surface 20, and the cutter 50 grasped by the pen carriage 30 is pressed against the front surface of the sheet 60. Under this state, the driving motors 40 and 42 are rotated to move the pen carriage 30 in the X-Y directions on the sheet 60 put on the recording surface 20. Thus, the contours of a character, a symbol or the like can be cut in the surface of the sheet 60.

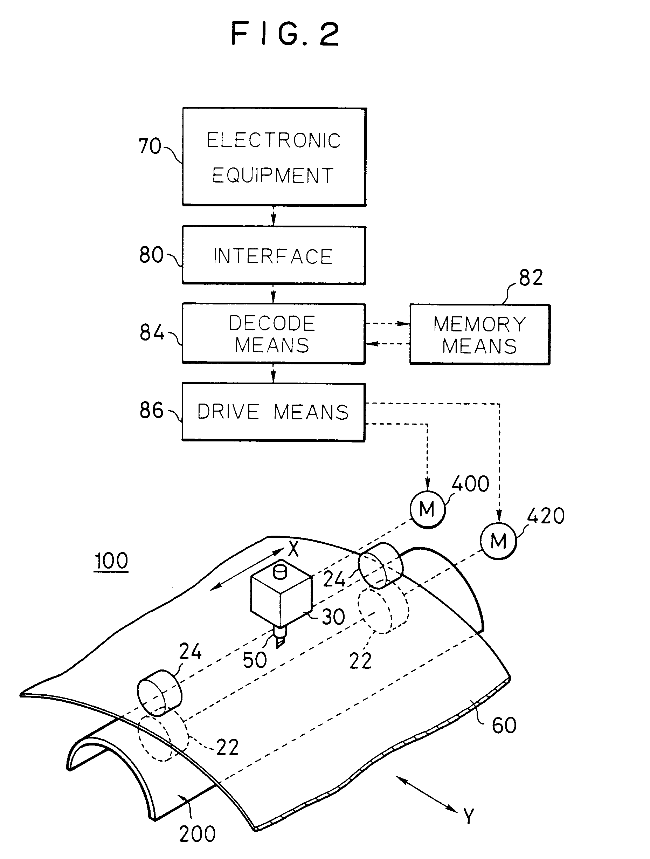

Fig. 2 shows a block diagram for explaining the schematic construction of the preferred embodiment in the case where the present invention is applied to a cutting plotter called the "paper moving type". The embodiment illustrated in the figure will be described below.

The cutting plotter 100 in Fig. 2 has a recording surface 200 whose vertical section is substantially in the shape of a circular arc and which extends laterally.

Drive rollers 22 are respectively mounted under both the sideward parts of the recording surface 200 so as to be rotatable in the widthwise direction, namely, Y direction of this recording surface, in the state in which the partial peripheral surfaces of the drive rollers 22 are exposed over the recording surface 200.

Pinch rollers 24 are respectively mounted over and opposite the drive rollers 22 at both the sideward parts of the recording surface 200 so as to be rotatable in the widthwise direction, namely, Y direction of this recording surface, in the state in which the partial peripheral surfaces of the pinch rollers 24 are held in pressed contact with those of the drive rollers 22 exposed over the recording surface 200.

A driving motor, such as servomotor or stepping motor, 420 for synchronously rotating the drive rollers 22 at both the sideward parts of the recording surface 200 is coupled to these drive rollers 22 through transmission means (not shown) configured of a gear mechanism etc. for transmitting the turning force of the motor 420 to the drive rollers 22.

A pen carriage 30 is supported on the recording surface 200 through support means such as rails (not shown) so as to be movable in the lengthwise direction, namely, X direction of the recording surface 200.

A driving motor, such as servomotor or stepping motor, 400 for moving the pen carriage 30 in the X direction on the recording surface 200 is coupled to the pen carriage 30 through transmission means (not shown) constructed of the combination of a pulley, wire etc. for transmitting the turning force of the driving motor 400 to the pen carriage 30.

Further, a cutter 50 formed with a blade at its fore end is grasped by the pen carriage 30 so as to be rotatable on its own axis.

With the above construction, in the state in which a sheet 60 is placed on the recording surface 200 and has both its side edges held between the drive rollers 22 and the corresponding pinch rollers 24 mounted at both the sideward parts of the recording surface 200, the driving motor 420 is rotated to synchronously rotate the drive rollers 22 at both the sideward parts of the recording surface 200 and to move the sheet 60 in the Y direction on the recording surface 200. Simultaneously, in the state in which the cutter 50 grasped by the pen carriage 30 is pressed against the front surface of the sheet 60, the driving motor 400 is rotated to move the pen carriage 30 in the X direction. Thus, the contours of a character, a symbol or the like can be cut in the surface of the sheet 60.

Both the constructions described above are similar to the constructions of the prior-art cutting plotters called the flat bed type and the paper moving type, respectively. In addition to the foregoing construction, each of the cutting plotters proper of the cutting plotter systems shown in Fig. 1 and Fig. 2 is furnished with an interface 80 which is configured of a connector, a cord, an electronic connection appliance or the like and which connects the cutting plotter 10 or 100 with an electronic equipment, such as word processor, personal computer or electronic pocketbook, 70. This electronic equipment 70 is used as a host computer for driving the cutting plotter 10 or 100, and is capable of affording characters, symbols etc. as inputs.

The cutting plotter 10 or 100 is also furnished with memory means, such as a ROM, hard disk or floppy disk, 82 for storing therein the contour data of a plurality of characters, symbols etc. which are to be cut by this cutting plotter.

Further, the cutting plotter 10 or 100 is furnished with drive means 86 configured of a semiconductor device or the like, for rotating the driving motors 40, 42 or 400, 420 of this cutting plotter on the basis of the contour data of the characters, symbols etc. stored in the memory means 82.

Besides, the cutting plotter 10 or 100 is furnished with decode means 84 configured of a semiconductor device or the like. This decode means 84 functions to decode codes such as JIS (Japanese Industrial Standards) codes for printer controls and transmitted from the electronic equipment 70 to the cutting plotter 10 or 100 through the interface 80; to extract the contour data of a character, a symbol or the like corresponding to the codes, from the plurality of contour data items stored in the memory means 82; and to actuate the drive means 86 on the basis of the extracted contour data of the character, the symbol or the like.

The cutting plotter systems including the cutting plotters 10 and 100 of the flat bed type and the paper moving type respectively shown in Fig. 1 and Fig. 2 are contrived as described above, and are used as explained below.

In the cutting plotter system of the above construction including the cutting plotter 10 or 100, a character, a symbol or the like which corresponds to the contours of a character, a symbol or the like to be cut by the cutting plotter 10 or 100 is afforded as an input from a keyboard or the like to the electronic equipment 70 such as word processor, personal computer or electronic pocketbook. Subsequently, the printer controlling codes of the character, the symbol or the like afforded as the input are transmitted from the electronic equipment 70 to the decode means 84 through the interface 80. Subsequently, the decode means 84 decodes the codes, extracts the contour data of the character, the symbol or the like corresponding to the codes from the plurality of contour data items stored in the memory means 82, and actuates the drive means 86 on the basis of the extracted contour data of the character, the symbol or the like. Thus, in the state in which the cutter 50 grasped by the pen carriage 30 is pressed against the surface of the sheet 60 placed on the recording surface 20 or 200, the pen carriage 30 is moved in the X-Y directions relative to the sheet 60 on this sheet.

Then, the contours of the character, the symbol or the like corresponding to the character, the symbol or the like afforded as the input to the electronic equipment 70 can be automatically cut in the surface of the sheet 60 put on the recording surface 20 or 200, by the cutter 50.

By the way, in each of the cutting plotter systems of the foregoing embodiments including the respective cutting plotters 10 and 100 called the flat bed type and the paper moving type, the contour data items of a plurality of characters, symbols etc. each having different sizes may well be stored in the memory means 82. In this case, the decode means 84 operates to extract the contour data of a character, a symbol or the like of predetermined size corresponding to printer controlling codes which indicate a character, a symbol or the like and the size thereof and which are transmitted from the electronic equipment 70 to the decode means 84 through the interface 80, from the plurality of contour data items stored in the memory means 82 of the cutting plotter system, and to actuate the drive means 86 on the basis of the extracted contour data of the character, the symbol or the like of predetermined size. Thus, the contours of the identical character, the identical symbol or the like having the different sizes can be preferably cut in the surface of the sheet 60 at will by the cutter 50.

Moreover, the memory means 82 of the cutting plotter system may well include a hard disk, a floppy disk or the like whose stored contents can be changed or replaced. In this case, the contour data items of characters, symbols etc. stored in the memory means 82 are changed or replaced. Thus, the contours of various characters of different styles, various symbols of different shapes, etc.

can be conveniently cut in the surface of the sheet 60 at will by the cutter 50.

As described above, according to the cutting plotter system of the present invention, an electronic equipment, such as word processor, personal computer or electronic pocketbook, which is commonly used and to which characters, symbols etc. can be afforded as inputs, is employed as a host computer for driving the cutting plotter proper. Accordingly, the cutting plotter proper can be driven to cut the contours of a character, a symbol or the like in the surface of a sheet without the necessity of setting the contour data of the character, the symbol or the like for driving the cutting plotter proper and software for controlling the cutting plotter proper, in the host computer on each occasion through input operations expending much labor.

Simultaneously, the contour data of the character, the symbol or the like to be cut is transmitted from the host computer to the cutting plotter proper, and labor and a time period for temporarily storing or decoding the contour data in the cutting plotter proper are dispensed with. Accordingly, the contours of the character, the symbol or the like can be cut in the surface of the sheet easily and promptly without expending labor, by the cutting plotter proper.

The preferred embodiments described in this specification and illustrated in the drawings are exemplary and are not restrictive, and various other modifications are, of course, possible. The scope of the invention is defined by the appended claims, and all modifications falling within the significances of those claims shall be covered within the present invention.

## Claims

1. In a cutting plotter wherein, in a state in which a cutter (50) grasped by a pen carriage (30) so as to be rotatable on its own axis is pressed against a surface of a sheet (60) placed on a recording surface (20;200), the pen carriage (30) is moved in X-Y directions relative to the sheet on this sheet, to thereby cut contours of a character, a symbol or the like in the sheet surface;

    a cutting plotter system comprising an electronic equipment (70) to which a character, a symbol or the like can be given as an input, an interface (80) which connects said cutting plotter to said electronic equipment (70), memory means (82) for storing therein contour data items of a plurality of characters, symbols etc. to be cut by said cutting plotter, drive means (86) for driving said cutting plotter on the basis of the contour data items of the characters, symbols etc. stored in said memory means (82), and decode means (84) for decoding printer controlling codes transmitted from said electronic equipment (70) thereto through said interface (80), for extracting contour data of the character, a symbol or the like corresponding to the codes from the contour data items of the plurality of characters, symbols etc. stored in said memory means (82), and for actuating said drive means (86) on the basis of the extracted contour data of the character, the symbol or the like.

2. A cutting plotter system as defined in Claim 1, wherein the contour data items of the plurality of characters, symbols etc. stored in said memory means (82) are contour data items of a plurality of characters, symbols etc. each having a different size.

3. A cutting plotter system as defined in Claim 1 or 2, wherein said memory means (82) is memory means whose stroed contents can be changed or replaced.

4. A cutting plotter system as defined in Claim 1 or 2, wherein said cutting plotter is a flat bed type plotter.

5. A cutting plotter system as defined in Claim 1 or 2, wherein said cutting plotter is a paper moving type plotter.

6. In a cutting plotter having a recording surface (20) which is formed to be flat, a pen carriage (30) by which a cutter (50) is grasped so as to be rotatable on its own axis, a first driving motor (40) which moves the pen carriage (30) in an X direction, and a second driving motor (42) which moves the pen carriage (30) in a Y direction, wherein in a state in which the cutter (50) is pressed against a surface of a sheet (60) placed on the recording surface (20), the pen carriage (30) is moved in the X-Y directions on the sheet by actuating the driving motors (40,42), to thereby cut contours of a character, a symbol or the like in the sheet surface;
a cutting plotter system comprising an electronic equipment (70) to which a character, a symbol or the like can be given as an input, an interface (80) which connects said cutting plotter to said electronic equipment (70), memory means (82) for storing therein contour data items of a plurality of characters, symbols etc. to be cut by said cutting plotter, drive means (86) for driving said first and second driving motors (40,42) on the basis of the contour data items of the characters, symbols etc. stored in said memory means (82), and decode means (84) for decoding printer controlling codes transmitted from said electronic equipment (70) thereto through said interface (80), for extracting contour data of a character, a symbol or the like corresponding to the codes from the contour data items of the plurality of characters, symbols etc. stored in said memory means (82), and for actuating said drive means (86) on the basis of the extracted contour data of the character, the symbol or the like.

7. A cutting plotter system as defined in Claim 6, wherein the contour data items of the plurality of characters, symbols etc. stored in said memory means (82) are contour data items of a plurality of characters, symbol etc. each having a different size.

8. A cutting plotter system as defined in Claim 6 or 7, wherein said memory means (82) is memory means whose stored contents can be changed or replaced.

9. In a cutting plotter having a recording surface (200) which is formed to have a circular arc section and to extend laterally, a pen carriage (30) by which a cutter (50) is grasped so as to be rotatable on its own axis, a drive roller and a pinch roller set (22,24) held in pressed and rotatable contact with each other respectively mounted on each sideward part of said recording surface (200), a first driving motor (400) which moves the pen carriage (30) in an X direction, and a second driving motor (420) which rotates the drive rollers (22), wherein in a state in which the cutter is pressed against a surface of a sheet (60) placed on the recording surface (200), the pen carriage (30) is moved in the X-Y directions relative to the sheet on this sheet by actuating the driving motors (400,420), to thereby cut contours of a character, a symbol or the like in the sheet surface;
a cutting plotter system comprising an electronic equipment (70) to which a character, a symbol or the like can be given as an input, an interface (80) which connects said cutting plotter to said electronic equipment (70), memory means (82) for storing therein contour data items of a plurality of characters, symbols etc. to be cut by said cutting plotter, drive means (86) for driving said first and second driving motors (400,420) on the basis of the contour data items of the characters, symbols etc. stored in said memory means (82), and decode means (84) for decoding printer controlling codes transmitted from said electronic equipment (70) thereto through said interface (80), for extracting contour data of a character, a symbol or the like corresponding to the codes from the contour data items of the plurality of characters, symbols etc. stored in said memory means (82), and for actuating said drive means (86) on the basis of the extracted contour data of the character, the symbol or the like.

10. A cutting plotter system as defined in Claim 9, wherein the contour data items of the plurality of characters, symbols etc. stored in said memory means (82) are contour data items of a plurality of characters, symbols etc. each having a different size.

11. A cutting plotter system as defined in Claim 9 or 10, wherein said memory means (82) is memory means whose stored contents can be changed or replaced.

# F I G. 1

# F I G. 2

## DOCUMENTS CONSIDERED TO BE RELEVANT

EP 91107359.1

| Category | Citation of document with indication, where appropriate, of relevant passages | Relevant to claim | CLASSIFICATION OF THE APPLICATION (Int. Cl.5) |
|---|---|---|---|
| X | CH - A5 - 633 743 (GERBER GARMENT TECHNOLOGY, INC.) * Totality * | 1,2,4. | B 26 D  5/30 G 06 K 15/00 |
| A | * Totality * | 6,7,9, 10 | |
| A | DE - A1 - 3 109 228 (GERBER GARMENT TECHNOLOGY INC.) * Page 19, line 19 - page 25; fig. 1 * | 1,2,3, 4,6,7, 8,9, 10,11 | |
| A | DE - A1 - 3 915 142 (CANON K.K.) * See especially fig. 2 * | 1,2 | |
| Y | * See especially fig. 2 * | 5,9,10 | |
| Y | US - A - 4 369 453 (BRANDT) * Column 2, lines 14ff; fig. 1 * | 5,9,10 | TECHNICAL FIELDS SEARCHED (Int. Cl.5) |
| A | GB - A - 2 057 956 (CAMSCO INC.) * Page 3, line 110 - page 5, line 20 * ---- | 9 | B 25 J  9/00 B 26 D  1/00 B 26 D  5/00 B 26 D  7/00 G 06 K 15/00 G 01 D 15/00 |

The present search report has been drawn up for all claims

| Place of search | Date of completion of the search | Examiner |
|---|---|---|
| VIENNA | 07-10-1991 | SCHNEEMANN |